(19) Europäisches Patentamt

European Patent Office

Office européen des brevets

(11) **EP 1 675 102 A2**

(12) **EUROPEAN PATENT APPLICATION**

(43) Date of publication:
**28.06.2006 Bulletin 2006/26**

(51) Int Cl.:
*G10L 15/02* (2006.01)

(21) Application number: **05026515.6**

(22) Date of filing: **05.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **13.12.2004 KR 2004105110**

(71) Applicant: **LG Electronics Inc.**
**Yongdungpo-gu**
**Seoul (KR)**

(72) Inventor: **Kim, Chan-Woo**
**Ilsan-Gu**
**Goyang**
**Gyeonggi-Do (KR)**

(74) Representative: **Katérle, Axel et al**
**Wuesthoff & Wuesthoff**
**Patent- und Rechtsanwälte**
**Schweigerstraße 2**
**81541 München (DE)**

(54) **Method for extracting feature vectors for speech recognition**

(57)    Disclosed is a method for speech recognition which achieves a high recognition rate. The method includes extracting a parameter from an input signal that represents a characterization of the input signal as a voiced or unvoiced sound, extracting at least one feature vector corresponding to an overall spectrum shape of a voice from an input signal, and using the extracted parameter and extracted feature vectors in a training phase and in a recognition phase to recognize speech.

# FIG. 1

```
                    ┌──────────┐
                    │  Start   │
                    └──────────┘
                          │
                          ▼
        ┌─────────────────────────────────────┐
        │ Extracting feature vectors with      │
        │ respect to overall spectrum shape    │──── S110
        │ of voice                             │
        └─────────────────────────────────────┘
                          │
                          ▼
        ┌─────────────────────────────────────┐
        │ Extracting feature vectors with      │
        │ respect to voiced/unvoiced decision  │──── S120
        └─────────────────────────────────────┘
                          │
                          ▼
        ┌─────────────────────────────────────┐
        │ Utilizing extracted feature vectors  │──── S130
        └─────────────────────────────────────┘
                          │
                          ▼
                    ┌──────────┐
                    │   End    │
                    └──────────┘
```

EP 1 675 102 A2

**Description**

**BACKGROUND OF THE INVENTION**

1. Field of the Invention

The present invention relates to speech recognition, and more particularly, to a method for extracting feature vectors which achieves a high speech recognition rate.

2. Description of the Background Art

In the field of speech recognition, the two speech recognition methods which are primarily used are Hidden Markov Model (HMM), and Dynamic Time Warping (DTW).

In a HMM-based speech recognition method, HMM parameters are obtained in a training phase and stored in a speech database, and a Markov processor searches for a model having the highest recognition rate using a Maximum Likelihood (ML) method. Feature vectors necessary for speech recognition are extracted, and training and speech recognition are performed using the extracted feature vectors.

During the training phase, HMM parameters are typically obtained using an Expectation-Maximization (EM) algorithm or a Baum-Welch re-estimation algorithm. A Viterbi algorithm is typically used in the speech recognition phase.

In order to increase a speech recognition rate, Wiener Filtering preprocessing may be performed. A speech recognition rate can also be increased by using a technique that accounts for grammar, such as by using a language model.

Since the HMM-based speech recognition method can be used for Continuous Speech Recognition (CSR), is suitable for large vocabulary recognition, and provides an excellent recognition rate, recently, the HMM-based speech recognition method has become widely used.

In the DTW-based speech recognition method, a general pattern and a given input pattern are compared and similarities therebetween are determined. For example, the time duration of a word or sequence of words varies based upon who the speaker is, the emotions of the speaker, and the environment in which the speaker is speaking. The DTW-based speech recognition method as a method for nonlinearly optimizing such a discrepancy between time durations performs total optimization on the basis of partial optimization as a method for nonlinearly optimizing such a discrepancy between time durations.

DTW is typically used for recognizing isolated words, and is typically used in association with a small vocabulary of words. The vocabulary can be easily modified by adding new patterns corresponding to new words.

The HMM and DTW recognition methods perform speech recognition by extracting feature vectors related to the overall spectrum shape of a speech. However, one of the limitations of these methods is that they do not take into consideration the differences between voiced and unvoiced sounds that make up a speech.

**SUMMARY OF THE INVENTION**

In view of the foregoing, the present invention, through one or more of its various aspects, embodiments and/or specific features or sub-components, is thus intended to bring out one or more of the advantages as specifically noted below.

An object of the present invention is to provide a method for extracting feature vectors which achieves a high speech recognition rate. To achieve these and other advantages and in accordance with the purpose of the present invention, as embodied and broadly described herein, there is provided a method for extracting feature vectors for speech recognition, which includes extracting a parameter from an input signal that represents a characterization of the input signal as a voiced or unvoiced sound, and recognizing speech based upon the extracted parameter. The method also includes extracting a feature vector based upon the extracted parameter.

Preferably, the parameter is calculated using

the equation: $\eta = \dfrac{\max r_{\underline{x}}[n]}{r_{\underline{x}}[0]}$, , where

$$r_{\underline{x}}^{(k)}[n] = \frac{1}{N_f} \left\{ \sum_{n=0}^{N_f - 1} |x[n] - x[n-m]|^k \right\}^{\frac{1}{k}}, \quad \eta$$

represents the extracted parameter, and $N_f$ represents the length of a frame in which it is determined whether a sound is voiced or unvoiced. Preferably, the value of k is one of 1, 2 and 3.

The extracted parameter is greater than or equal to a threshold value when the input signal includes a voiced sound, and is less than a threshold value when the input signal includes an unvoiced sound. Recognizing speech may include utilizing one of a Hidden Markov Model-based recognition method, a Dynamic Time Warping-based recognition method, and a neural network-based recognition method. Other speech recognition methods and models can also be utilized.

According to one embodiment, the method may include generating a bit which indicates whether the input signal includes a voiced sound or an unvoiced sound, based upon the extracted parameter, and recognizing the speech based upon the generated bit. The method may also include adding at least one of a differential coefficient and an acceleration coefficient to the extracted parameter.

According to another embodiment, the method may also include extracting at least one feature vector corresponding to an overall spectrum shape of a voice from the input signal, and recognizing speech based upon the at least one extracted feature vector and the extracted parameter. The parameter may be calculated within an available pitch range.

A computer-readable medium is also provided which includes a program for recognizing speech. The program includes instructions for extracting a parameter from an input signal that represents a characterization of the input signal as a voiced or unvoiced sound, and recognizing speech based upon the extracted parameter. The program may also include instructions for extracting a feature vector based upon the extracted parameter.

Preferably, the parameter is calculated using

the equation: $\eta = \dfrac{\max r_{\underline{x}}[n]}{r_{\underline{x}}[0]}$, where $r_{\underline{x}}^{(k)}$

$$r_{\underline{x}}^{(k)}[n] = \frac{1}{N_f}\left\{\sum_{n=0}^{N_f-1}\left|x[n]-x[n-m]\right|^k\right\}^{\frac{1}{k}}, \eta \text{ rep-}$$

resents the extracted parameter, and $N_f$ represents the length of a frame in which it is determined whether a sound is voiced or unvoiced. Preferably, the value of k is one of 1, 2 and 3.

The extracted parameter is greater than or equal to a threshold value when the input signal includes a voiced sound, and is less than a threshold value when the input signal includes an unvoiced sound. The instructions for recognizing speech may include instructions which utilize one of a Hidden Markov Model-based recognition method, a Dynamic Time Warping-based recognition method, and a neural network-based recognition method. Other speech recognition models and methods can also be utilized.

According to one embodiment, the program may also include instructions for generating a bit which indicates whether the input signal includes a voiced sound or an unvoiced sound, based upon the extracted parameter, and recognizing the speech based upon the generated bit. The program may also include instructions for adding at least one of a differential coefficient and an acceleration coefficient to the extracted parameter.

The foregoing and other objects, features, aspects and advantages of the present invention will become more apparent from the following detailed description of the present invention when taken in conjunction with the accompanying drawings.

**BRIEF DESCRIPTION OF THE DRAWINGS**

The present invention is further described in the detailed description that follows, by reference to the noted drawings by way of non-limiting examples of embodiments of the present invention, in which like reference numerals represent similar parts throughout several views of the drawing.

In the drawings:

Figure 1 is a flowchart illustrating a method for extracting feature vectors for speech recognition in accordance with the present invention; and
Figures 2A-2D illustrate exemplary waveforms of voiced and unvoiced sounds.

**DETAILED DESCRIPTION OF THE PREFERRED EMBODIMENTS**

Reference will now be made in detail to the preferred embodiments of the present invention, examples of which are illustrated in the accompanying drawings.

A method of the present invention includes generating a parameter based on a decision whether a sound is voiced or unvoiced, and using the parameter in a training phase and in a recognition phase, along with feature vectors related to the overall spectrum shape of speech. The method may be implemented with a computer program stored in a recording medium such as, but not limited to, a memory.

Human speech consists of voiced sounds and unvoiced sounds. A voiced sound is produced when a vocal cord vibrates during speech, and an unvoiced sound is produced when the vocal cord produces speech without vibrating.

All vowels are voiced sounds, as are plosive sounds [b], [d] and [g]. However, plosive sounds [k], [p] and [t] and fricative sounds [f], [th], [s] and [sh] are unvoiced sounds. Although plosive sounds [p] and [b] are similarly pronounced (as well as [d] and [t], and [g] and [k]), completely different words are formed based upon whether the plosive sounds are voiced or unvoiced (for example, 'pig' versus 'big'). Accordingly, a phone may be classified as either a voiced sound or an unvoiced sound.

Hereinafter, a preferred embodiment of the present invention will be described with reference to the accompanying drawings.

In describing the present invention, if a detailed explanation for a related known function or construction is considered to unnecessarily divert the gist of the present invention, such explanation has been omitted but would be understood by those skilled in the art.

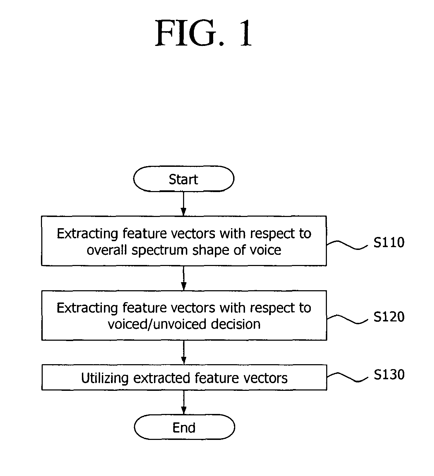

Figure 1 is a flowchart showing an implementation of a method for extracting feature vectors for speech recognition in accordance with the present invention.

With reference to Figure 1, feature vectors related to an overall spectrum shape of a first inputted voice signal are extracted from the voice signal (S110).

The feature vectors related to the overall spectrum shape of the voice signal may include at least one of a Linear Prediction Coefficient (LPC), a Linear Prediction Cepstral Coefficient (LPCC), a Mel-Frequency Cepstral Coefficient (MFCC), a Perceptual Linear Prediction Coefficient (PLPC), and the like.

According to the method of the invention, feature vectors related to voiced and unvoiced sounds present in the voice signal are also extracted from the voice signal (S120). The feature vectors may be generated, for example, by extracting parameters related to whether sounds are voiced or unvoiced, experimentally obtaining a proper gain value (G), and weighting the extracted parameters.

Various methods may be used to determine whether a sound is voiced or unvoiced. A relatively easy method involves using the following equation.

$$r_{\underline{x}}^{(k)}[n] = \frac{1}{N_f}\left\{\sum_{n=0}^{N_f-1}|x[n]-x[n-m]|^k\right\}^{\frac{1}{k}}$$

Here, $N_f$ means the length of a frame in which it is determined whether a sound is voiced or unvoiced. If k=1, the above equation represents an Average Magnitude Difference Function (AMDF). If k=2, the equation is similar to the square of an autocorrelation function.

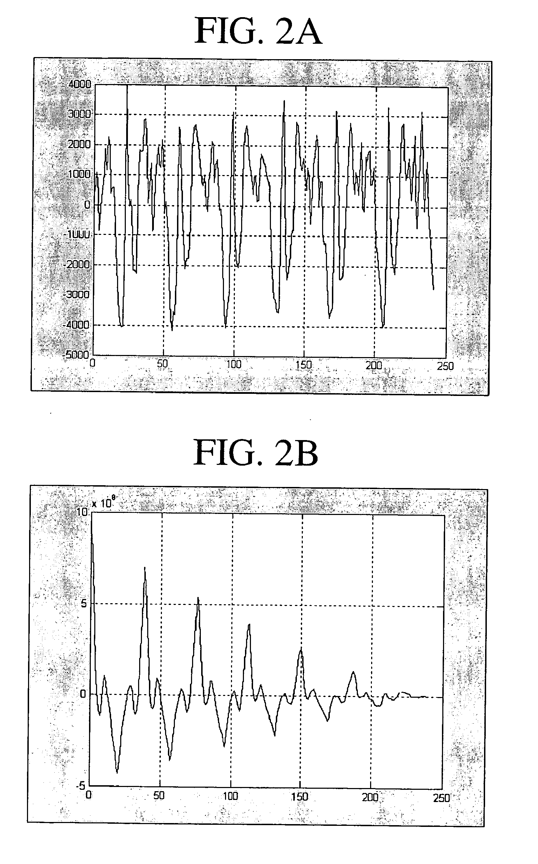

The value k can be any constant from 1 to 3. Experimentation has shown that the best results occur when k=2. However, an advantage of having k=1 is that multiplication is not required. Thus, for pitch extraction, the most favorable value of k is either 1 or 2. Although k can be any constant from 1 to 3, in the embodiment described below, the value of k is 2. An autocorrelation function which results when k=2 is shown in the following equation and will be described below with reference to Figures 2A-2D. The equation is:

$$r_{\underline{x}}[n] = \sum_{n=0}^{N_f}|x[n]-x[n-m]|^k$$

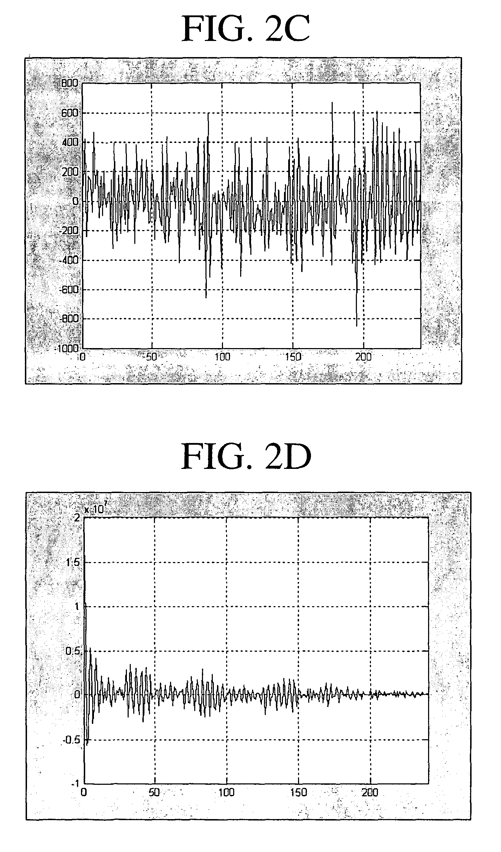

Figures 2A-2D illustrate waveforms of voiced and unvoiced sounds. Figures 2A and 2B illustrate voiced sounds, Figures 2C and 2D illustrate unvoiced sounds, and Figures 2B and 2D illustrate autocorrelation functions.

As shown in Figures 2A and 2B, a waveform of a voiced sound includes a repeating pattern. However, as shown in Figures 2C and 2D, a waveform of an unvoiced sound does not include a repeating pattern.

If max $r_x[n]$ is examined in a range where pitch can exist, values $r_x[0]$ and max $r_x[n]$ are almost the same in Figure 2B, but are considerably different in Figure 2D.

A ratio (η) of $r_x[0]$ to max $r_x[n]$ is expressed by the following equation:

$$\eta = \frac{\max r_{\underline{x}}[n]}{r_{\underline{x}}[0]}$$

Assuming that an available pitch range is 50 to 500Hz, at a sampling rate of 8 kHz, n will range from 16 to 160.

If $\eta = \dfrac{\max r_{\underline{x}}[n]}{r_{\underline{x}}[0]}$ and $16 \leq n \leq 160$, a value η is approximately 0.75 for a voiced sound, as shown in Figure 2B, and approximately 0.25 for an unvoiced sound, as shown in Figure 2D.

Accordingly, if the value η of an input signal is great, the input signal is most likely a voiced sound. If the value η of the input signal is small, the input signal is most likely an unvoiced sound. Therefore, by comparing a value η to a threshold, it can be determined that an input signal is a voiced signal if the value η is greater than or equal to the threshold, and it can be determined that the input signal is an unvoiced signal if the value η is smaller than the threshold.

The range of n can vary according to the sampling rate.

Additionally, a 1 bit indicator may be generated which represents whether a value of the parameter η is greater than or less than the threshold value. However, it is preferred that the parameter η itself be used to extract the feature vector, as the performance of a recognizer may deteriorate if the 1 bit indicator is incorrectly generated.

The extracted feature vectors are utilized in a training phase and in a recognition phase (S130). The extracted vectors can be used by adding a parameter in a HMM-based or DTW-based method in order to increase a recognition rate, and can be used in a speech recognition method using a neural network.

In addition, for the purpose of improving the performance, feature vectors such as a differential coefficient or an acceleration coefficient can also be utilized.

As described above, the method of the present invention for extracting feature vectors for speech recognition achieves an improved speech recognition rate by generating a parameter characterizing an input signal as a voiced or unvoiced sound, and utilizing the parameter in a training phase and a recognition phase for speech recognition.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

In an embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

The present disclosure contemplates a computer-readable medium that includes instructions or receives and executes instructions responsive to a propagated signal. The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium. Accordingly, the disclosure is considered to include any one or more of a computer-readable medium or a distribution medium and other equivalents and successor media, in which data or instructions may be stored.

Although the present specification describes components and functions that may be implemented in particular embodiments with reference to particular standards and protocols, the invention is not limited to such standards and protocols. Each of the standards, protocols and languages represent examples of the state of the art. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

**Claims**

1. A method for recognizing speech, comprising:

   extracting a parameter from an input signal that represents a characterization of the input signal as a voiced or unvoiced sound; and
   recognizing speech based upon the extracted parameter.

2. The method according to claim 1, further comprising extracting a feature vector based upon the extracted parameter.

3. The method according to claim 1, wherein the parameter is calculated using the equation:

$$\eta = \frac{\max r_{\underline{x}}[n]}{r_{\underline{x}}[0]} \, ,$$

   wherein

$$r_{\underline{x}}^{(k)}[n] = \frac{1}{N_f} \left\{ \sum_{n=0}^{N_f-1} \left| x[n] - x[n-m] \right|^k \right\}^{\frac{1}{k}} ,$$

   $\eta$ represents the extracted parameter, and $N_f$ represents the length of a frame in which it is determined whether a sound is voiced or unvoiced.

4. The method according to claim 3, wherein the value of k is one of 1, 2 and 3.

5. The method according to claim 1, wherein the extracted parameter is greater than or equal to a threshold value when the input signal comprises a voiced sound.

6. The method according to claim 1, wherein the extracted parameter is less than a threshold value when the input signal comprises an unvoiced sound.

7. The method according to claim 1, wherein recognizing speech comprises utilizing a Hidden Markov Model-based recognition method.

8. The method according to claim 1, wherein recognizing speech comprises utilizing a Dynamic Time Warping-based recognition method.

9. The method according to claim 1, wherein recognizing speech comprises utilizing a neural network-based recognition method.

10. The method according to claim 1, further comprising:

    generating a bit which indicates whether the input signal comprises a voiced sound or an unvoiced sound, based upon the extracted parameter, and
    recognizing the speech based upon the generated bit.

11. The method according to claim 1, further comprising adding at least one of a differential coefficient and an acceleration coefficient to the extracted parameter.

12. A method for recognizing speech, comprising:

    extracting at least one feature vector corresponding to an overall spectrum shape of a speech from an input signal;
    extracting a parameter from the input signal that represents a characterization of the input signal as a voiced or unvoiced sound; and
    recognizing speech based upon the at least one extracted feature vector and extracted parameter.

13. The method according to claim 12, wherein the parameter is calculated within an available pitch range using the equation:

$$\eta = \frac{\max r_{\underline{x}}[n]}{r_{\underline{x}}[0]} \, ,$$

    wherein
    an autocorrelation function $r_{\underline{x}}^{(k)}$

$$r_{\underline{x}}[n] = \sum_{n=0}^{N_f} \left| x[n] - x[n-m] \right|^k , \quad , \quad \eta \ \ \text{repre-}$$

    sents the extracted parameter, and $N_f$ represents the length of a frame in which it is determined whether a sound is voiced or unvoiced.

**14.** The method according to claim 12, wherein the extracted parameter is greater than or equal to a threshold value when the input signal comprises a voiced sound.

**15.** The method according to claim 12, wherein the extracted parameter is less than a threshold value when the input signal comprises an unvoiced sound.

**16.** The method according to claim 12, wherein recognizing speech comprises utilizing one of a Hidden Markov Model recognition method, a Dynamic Time Warping recognition method and a neural network recognition method.

**17.** The method according to claim 12, further comprising:

generating a bit which indicates whether the input signal comprises a voiced sound or an unvoiced sound, based upon the extracted parameter, and
recognizing the speech based upon the generated bit.

**18.** The method according to claim 12, further comprising adding at least one of a differential coefficient and an acceleration coefficient to the extracted parameter.

**19.** A computer-readable medium which comprises a program for recognizing speech, the program comprising instructions for:

extracting a parameter from an input signal that represents a characterization of the input signal as a voiced or unvoiced sound; and
recognizing speech based upon the extracted parameter.

**20.** The computer-readable medium according to claim 19, wherein the program further comprises instructions for extracting a feature vector based upon the extracted parameter.

**21.** The computer-readable medium according to claim 19, wherein the parameter is calculated using the equation:

$$\eta = \frac{\max r_{\underline{x}}[n]}{r_{\underline{x}}[0]},$$

wherein

$$r_{\underline{x}}^{(k)}[n] = \frac{1}{N_f}\left\{\sum_{n=0}^{N_f-1}\left|x[n]-x[n-m]\right|^k\right\}^{\frac{1}{k}},$$

η represents the extracted parameter, and $N_f$ represents the length of a frame in which it is determined whether a sound is voiced or unvoiced.

**22.** The computer-readable medium according to claim 21, wherein the value of k is one of 1, 2 and 3.

**23.** The computer-readable medium according to claim 19, wherein the extracted parameter is greater than or equal to a threshold value when the input signal comprises a voiced sound.

**24.** The computer-readable medium according to claim 19, wherein the extracted parameter is less than a threshold value when the input signal comprises an unvoiced sound.

**25.** The computer-readable medium according to claim 19, wherein the instructions for recognizing speech comprise instructions which utilize a Hidden Markov Model-based recognition method.

**26.** The computer-readable medium according to claim 19, wherein the instructions for recognizing speech comprise instructions which utilize a Dynamic Time Warping-based recognition method.

**27.** The computer-readable medium according to claim 19, wherein the instructions for recognizing speech comprise instructions which utilize a neural network-based recognition method.

**28.** The computer-readable medium according to claim 19, wherein the program comprises further instructions for:

generating a bit which indicates whether the input signal comprises a voiced sound or an unvoiced sound, based upon the extracted parameter, and
recognizing the speech based upon the generated bit.

**29.** The computer-readable medium according to claim 19, wherein the program comprises further instructions for adding at least one of a differential coefficient and an acceleration coefficient to the extracted parameter.

# FIG. 1

```
                    ┌─────────────┐
                    │    Start     │
                    └──────┬──────┘
                           │
        ┌──────────────────▼──────────────────┐
        │  Extracting feature vectors with     │      S110
        │  respect to overall spectrum shape   ├──~──
        │  of voice                            │
        └──────────────────┬──────────────────┘
                           │
        ┌──────────────────▼──────────────────┐
        │  Extracting feature vectors with     │      S120
        │  respect to voiced/unvoiced decision ├──~──
        └──────────────────┬──────────────────┘
                           │
        ┌──────────────────▼──────────────────┐      S130
        │   Utilizing extracted feature vectors├──~──
        └──────────────────┬──────────────────┘
                           │
                    ┌──────▼──────┐
                    │     End      │
                    └─────────────┘
```

# FIG. 2A

# FIG. 2B

# FIG. 2C

# FIG. 2D